# EUROPEAN PATENT APPLICATION

(11) **EP 3 623 908 A1**
(43) Date of publication of application: **18.03.2020**
(21) Application number: 18306203.3
(22) Date of filing: 14.09.2018
(51) Int. Cl.: G06F 3/01, G06F 3/16

(54) **A SYSTEM FOR CONTROLLING AUDIO-CAPABLE CONNECTED DEVICES IN MIXED REALITY ENVIRONMENTS**

(71) Applicant: InterDigital CE Patent Holdings, 75017 Paris (FR)
(72) Inventor: PHOENIX, Viktor, Los Angeles, CA California 90004 (US); ALLEAUME, Vincent, 35576 Cesson-Sévigné (FR); FRADET, Matthieu, 35576 Cesson-Sévigné (FR)
(74) Representative: Huchet, Anne

(57) **Abstract**

A method and apparatus is provided providing content and controlling acoustic data and sounds associated with the content. In one embodiment, the progress of a virtual reality content provided in a mixed reality environment is monitored. The content includes virtual reality scenes and at least one image obtained from a real environment. Furthermore, at least one virtual acoustic data associated with said virtual reality content is obtained. The acoustic data is then modified based on said at least one image provided in said real environment with the mixed reality environment.

## Description

### TECHNICAL FIELD

The present disclosure relates generally to techniques creating immersive experiences and in particular those experiences that uses audio components in creating immersive experiences for mixed reality environments.

### BACKGROUND

In recent years, immersive experiences have become the subject of increased attention. These experiences are not only to replicate the reality of physical realm but are also used to transcend these physical experiences and create fantastic environments that may not be possible using the physical realm. To create these real or fantastic experiences using virtual devices, components are used that can duplicate physical senses. These components can be visual, haptic, auditory or include a combination of such senses. Even sense of smell and temperature can be used. Virtual Reality (VR) or Augmented Reality (AR) have been gaining popularity because they create such immersive experiences.

While audio cues are very important in creating immersive experiences, unfortunately, most efforts have been concentrated in areas of creating visual components for immersive environments. Consequently, while many technological advancements have been presented to increase the immersive nature of these environments, prior art still does not offer systems with enhanced audio components that can realistically provide a true immersive experience. Consequently, systems with improved audio components are desired.

### SUMMARY

Additional features and advantages are realized through similar techniques and other embodiments and aspects are described in detail herein. For a better understanding of advantages and features, refer to the description and to the drawings.

A method and apparatus is provided for providing content and controlling acoustic data and sounds associated with the content. In one embodiment, the progress of a virtual reality content provided in a mixed reality environment is monitored. The content includes virtual reality scenes and at least one image obtained from a real environment. Furthermore, at least one virtual acoustic data associated with said virtual reality content is obtained. The acoustic data is then modified based on said at least one image provided in said real environment with the mixed reality environment.

### BRIEF DESCRIPTION OF THE DRAWINGS

The present disclosure will be better understood and illustrated by means of the following embodiment and execution examples, in no way limitative, with reference to the appended figures on which:
Figure 1 schematically represents a functional overview of an encoding and decoding system according one or more embodiments of the disclosure;
Figure 2 schematically represents a system, according to one embodiment;
Figure 3 schematically represents a system, according to another embodiment;
Figure 4 schematically represents a system, according to another embodiment;
Figure 5 schematically represents a system, according to another embodiment;
Figure 6 schematically represents a system, according to another embodiment;
Figure 7 schematically represents a system, according to another embodiment;
Figure 8 schematically represents a system according to another embodiment;
Figure 9 schematically represents a system according to another embodiment;
Figure 10 schematically represents an immersive video rendering device according to an embodiment;
Figure 11 schematically represents an immersive video rendering device according to another embodiment;
Figure 12 schematically represents an immersive video rendering device according to another embodiment;
Figure 13 is an illustration of an example using an audio device according to one embodiment;
Figure 14 is an illustration of an example using a television set according to one embodiment;
Figure 15 is an illustration of an example using an audio device according to an alternate embodiment;
Figure 16 is an illustration of an example using an audio device according to yet another alternate embodiment;
Figure 17 is an illustration of a flow chart according to one embodiment; and
Figure 18 is an illustration of a second flowchart providing some details about the embodiment of Figure 17.

Wherever possible, the same reference numerals will be used throughout the figures to refer to the same or like parts.

### DESCRIPTION

It is to be understood that the figures and descriptions of the present embodiments have been simplified to illustrate elements that are relevant for a clear understanding of the present embodiments, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

In a Mixed Reality (MR) domain, the interactions between real and virtual worlds must be carefully considered to increase the immersion feeling of the user. Traditionally, the designers of immersive environments had concentrated on visual aspects of the Virtual Reality (VR), Augmented Reality (AR) or MR for the user to feel immersed. Many such designers consider that a good VR/AR/MR experience should be visually plausible. In the user's field of view (i.e. the image domain), spatial interactions between real and virtual objects like occlusions, collisions, shadows must be rendered efficiently. Unfortunately, sound and image go hand in hand in real world. Therefore, audio cues should be considered as at least as important as the visual when regarding the immersion feeling because an VR/AR/MR-audio experience is not limited to our field of view (horizontally: almost 180° for human vision but often < 130° for handheld devices with embedded cameras like tablets or smartphones; and for headsets, only 30° for HoloLens and 90° for Meta2) vs 360° both horizontally and vertically for audio). Which means that virtual objects even if not visible because out of our field of view should emit their own spatial sound and/or should modify our perception of other real or virtual sounds so that we can feel their presence. So, for a VR/AR/MR experience to be truly immersive you need convincing 3D audio to match the geometry and material properties of both your real and virtual 3D objects. So, parallel to the quite well-known spatial interactions between the real world and the virtual world in the image domain (occlusion, collisions, shadows, etc.), there needs to be also realistic interactions that are presented in the audio domain.

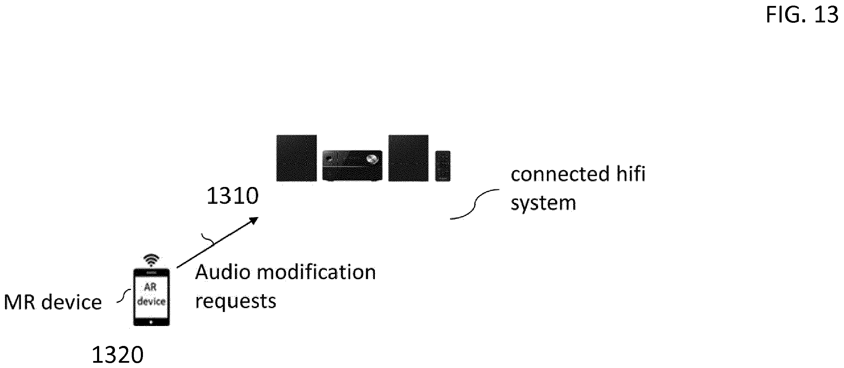

The environmental interactions for sound are similar to light, but slightly different because the waves are of course different. Sound is occluded by objects and reflects off surfaces, but it also diffracts around objects (game engines emulate this with occlusion) and is scattered by non-regular angles. Direct versus reflected sound helps define the size, shape, and materials in the environment (virtual or real). Sound propagation is a key aspect to spatial audio. Unfortunately, the present prior art provide three dimensional (3D) audio engines that can only render the aural component of the mixed reality experience by simulating 3D sound using direction, distance, and environmental simulations. These systems are quite simple with the current 3D engines to attach a spatial sound to a given virtual 3D object, it is not that obvious to know what to do with real world sounds played by real world sources and whose perception should theoretically be modified to match your MR scene and its scenario. Therefore, the prior art present cannot alter real world sounds. Generally, once the image is altered a new sound is played as needed in the AR/MR device. Phase inversion like active cancelling headphones and frequency masking have already been used but they also affect the sounds in the experience. Figures 13 to 18 provide a system and method that address these prior art shortcomings. However, before a more detailed look at Figures 13 to 18 can be provided, it may be useful to explore some other information about these systems and environments.

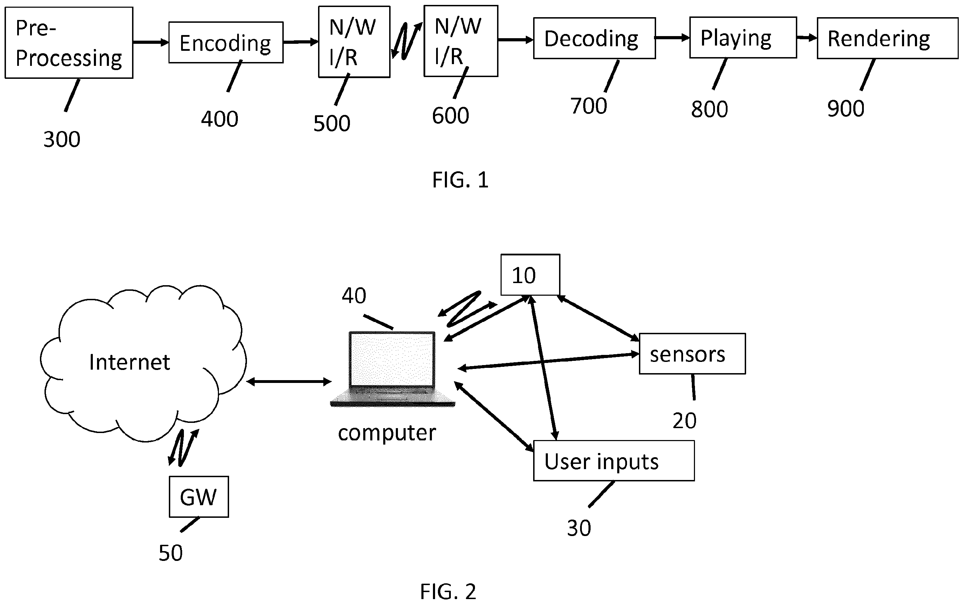

Figure 1 schematically illustrates a general overview of an encoding and decoding system according to one or more embodiments. The system of Figure 1 is configured to perform one or more functions. A pre-processing module 300 may be provided to prepare the content for encoding by an encoding device 400. The pre-processing module 300 may perform multi-image acquisition, merging of the acquired multiple images in a common space (typically a 3D sphere if directions are encoded), and mapping of the 3D sphere into a 2D frame using, for example, but not limited to, an equirectangular mapping or a cube mapping. The pre-processing module 300 may also acquire an omnidirectional video in a particular format (for example, equi-rectangular) as input, and pre-process the video to change the mapping into a format more suitable for encoding. Depending on the acquired video data representation, the pre-processing module 300 may perform a mapping space change. After being encoded, the data, which may be encoded immersive video data or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

Various types of systems may be used to perform functions of an immersive display device, for rendering an immersive video for example decoding, playing and rendering. Embodiments of a system, for processing augmented reality (AR) or virtual reality (VR) content are illustrated in figures 2 to 9. Such systems are provided with one or more processing functions, and include an immersive video rendering device which may be a head-mounted display (HMD), a tablet or a smartphone for example, and optionally include one or sensors. The immersive video rendering device may also include interface modules between the display device and one or more modules performing the processing functions.. The processing functions maybe integrated into the immersive video rendering device or performed by one or more processing devices. Such a processing device may include one or more processors and a communication interface with the immersive video rendering device, such as a wireless or wired communication interface.

The processing device may also include a communication interface with a wide access network such as internet and access content located on a cloud, directly or through a network device such as a home or a local gateway. The processing device may also access a local storage device through an interface such as a local access network interface, for example an Ethernet type interface. In an embodiment, the processing device may be provided in a computer system having one or more processing units. In another embodiment, the processing device may be provided in a smartphone which can be connected by a wired link or a wireless link to the video to change the mapping into a format more suitable for encoding. Depending on the acquired video data representation, the pre-processing module 300 may perform a mapping space change. After being encoded, the data, which may be encoded immersive video data or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

An immersive content typically refers to a video or other streamed content or images, potentially encoded on a rectangular frame that is a two-dimension array of pixels (i.e. element of color information) like a "regular" video or other form of image content. In many implementations, the following processes may be performed. To be rendered, the frame is, first, mapped on the inner face of a convex volume, also referred to as mapping surface (e.g. a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, various mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. There is a lack of taking specificities of immersive videos into account in encoding and decoding methods. Indeed, as immersive videos are 360° videos, a panning, for example, introduces motion and discontinuities that require a large amount of data to be encoded while the content of the scene does not change. Taking immersive videos specificities into account while encoding and decoding video frames would bring valuable advantages to the state-of-art methods.

In another embodiment, the system includes an auxiliary device which communicates with the immersive video rendering device and with the processing device. In such an embodiment, the auxiliary device may perform at least one of the processing functions. The immersive video rendering device may include one or more displays. The device may employ optics such as lenses in front of each display. The display may also be a part of the immersive display device such as for example in the case of smartphones or tablets. In another embodiment, displays and optics may be embedded in a helmet, in glasses, or in a wearable visor. The immersive video rendering device may also include one or more sensors, as described later. The immersive video rendering device may also include interfaces or connectors. It may include one or more wireless modules in order to communicate with sensors, processing functions, handheld or devices or sensors related to other body parts.

When the processing functions are performed by the immersive video rendering device, the immersive video rendering device can be provided with an interface to a network directly or through a gateway to receive and/or transmit content.

The immersive video rendering device may also include processing functions executed by one or more processors and configured to decode content or to process content. By processing content here, it is understood functions for preparing content for display. This may include, for instance, decoding content, merging content before displaying it and modifying the content according to the display device.

One function of an immersive content rendering device is to control a virtual camera which captures at least a part of the content structured as a virtual volume. The system may include one or more pose tracking sensors which totally or partially track the user's pose, for example, the pose of the user's head, in order to process the pose of the virtual camera. One or more positioning sensors may be provided to track the displacement of the user. The system may also include other sensors related to the environment for example to measure lighting, temperature or sound conditions. Such sensors may also be related to the body of a user, for instance, to detect or measure sweating or heart rate. Information acquired through these sensors may be used to process the content. The system may also include user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

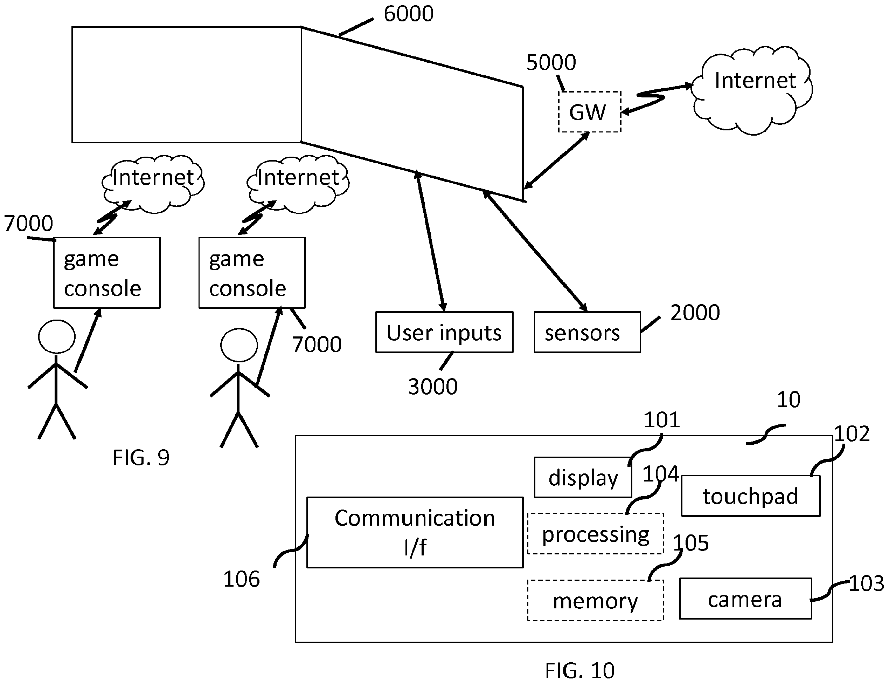

An embodiment of the immersive video rendering device 10, will be described in more detail with reference to Figure 10. The immersive video rendering device includes a display 101. The display is, for example an OLED or LCD type display. The immersive video rendering device 10 is, for instance a HMD, a tablet or a smartphone. The device 10 may include a touch sensitive surface 102 (e.g. a touchpad or a tactile screen), a camera 103, a memory 105 in connection with at least one processor 104 and at least one communication interface 106. The at least one processor 104 processes the signals received from the sensor(s) 20. Some of the measurements from sensors are used to compute the pose of the device and to control the virtual camera. Sensors which may be used for pose estimation include, for instance, gyroscopes, accelerometers or compasses. In more complex systems, a rig of cameras for example may also be used. The at least one processor 104 performs image processing to estimate the pose of the device 10. Some other measurements may be used to process the content according to environmental conditions or user reactions. Sensors used for detecting environment and user conditions include, for instance, one or more microphones, light sensor or contact sensors. More complex systems may also be used such as, for example, a video camera tracking eyes of a user. In such a case the at least one processor performs image processing to perform the expected measurement. Data from sensor(s) 20 and user input device(s) 30 may also be transmitted to the computer 40 which will process the data according to the input of the sensors.

Memory 105 includes parameters and code program instructions for the processor 104. Memory 105 may also include parameters received from the sensor(s) 20 and user input device(s) 30. Communication interface 106 enables the immersive video rendering device to communicate with the computer 40. The Communication interface 106 of the processing device may include a wireline interface (for example a bus interface, a wide area network interface, a local area network interface) or a wireless interface (such as a IEEE 802.11 interface or a Bluetooth® interface). Computer 40 sends data and optionally control commands to the immersive video rendering device 10. The computer 40 processes the data, for example to prepare the data for display by the immersive video rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example, decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

Embodiments of a first type of system for displaying augmented reality, virtual reality, augmented virtuality or any content from augmented reality to virtual reality will be described with reference to Figures 2 to 6. In one embodiment, these are combined with a large field-of-view content that can provide a 360 degree view of a real, fictional or mixed environment. This large field-of-view content may be, among others, a three-dimension computer graphic imagery scene (3D CGI scene), a point cloud, streaming content or an immersive video or panoramic picture or images. Many terms may be used to define technology that provides such content or videos such as for example Virtual Reality (VR), Augmented Reality (AR) 360, panoramic, 4π, steradians, omnidirectional, immersive and alongside large-field- of-view as previously indicated.

Figure 2 schematically illustrates an embodiment of a system configured to decode, process and render immersive videos. The system includes an immersive video rendering device 10, one or sensors 20, one or more user input devices 30, a computer 40 and a gateway 50 (optional).

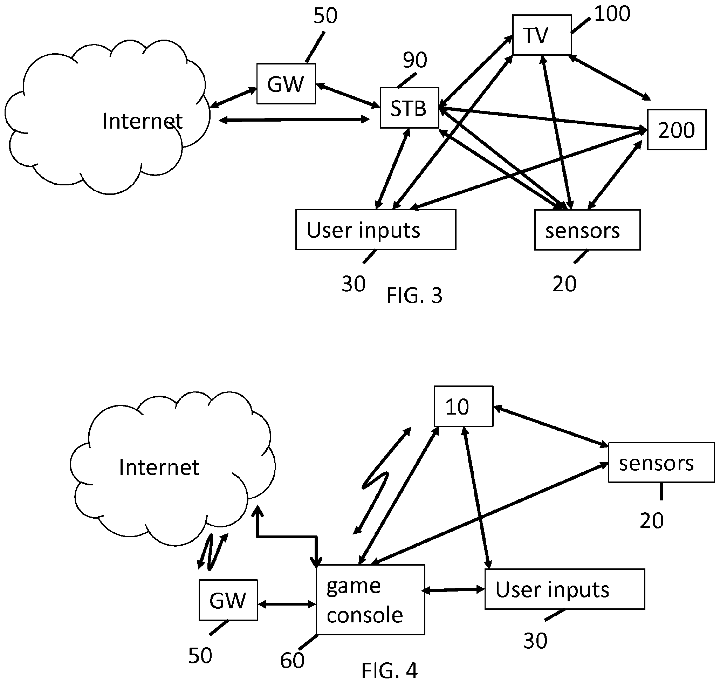

Figure 3 schematically represents a second embodiment of a system configured to decode, process and render immersive videos. In this embodiment, a STB 90 is connected to a network such as internet directly (i.e. the STB 90 includes a network interface) or via a gateway 50. The STB 90 is connected through a wireless interface or through a wired interface to a rendering device such as a television set 100 or an immersive video rendering device 200. In addition to classic functions of a STB, STB 90 includes processing functions to process video content for rendering on the television 100 or on any immersive video rendering device 200. These processing functions are similar to the processing functions described for computer 40 and are not described again here. Sensor(s) 20 and user input device(s) 30 are also of the same type as the sensor(s) and input device(s) described earlier with reference to Figure 2. The STB 90 obtains the data representative of the immersive video from the internet. In another embodiment, the STB 90 obtains the data representative of the immersive video from a local storage (not represented) where the data representative of the immersive video are stored.

Figure 4 schematically represents a third embodiment of a system configured to decode, process and render immersive videos. In the third embodiment a game console 60 processes the content data. Game console 60 sends data and optionally control commands to the immersive video rendering device 10. The game console 60 is configured to process data representative of an immersive video and to send the processed data to the immersive video rendering device 10 for display. Processing may be done exclusively by the game console 60 or part of the processing may be done by the immersive video rendering device 10.

The game console 60 is connected to internet, either directly or through a gateway or network interface 50. The game console 60 obtains the data representative of the immersive video from the internet. In another embodiment, the game console 60 obtains the rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example, decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

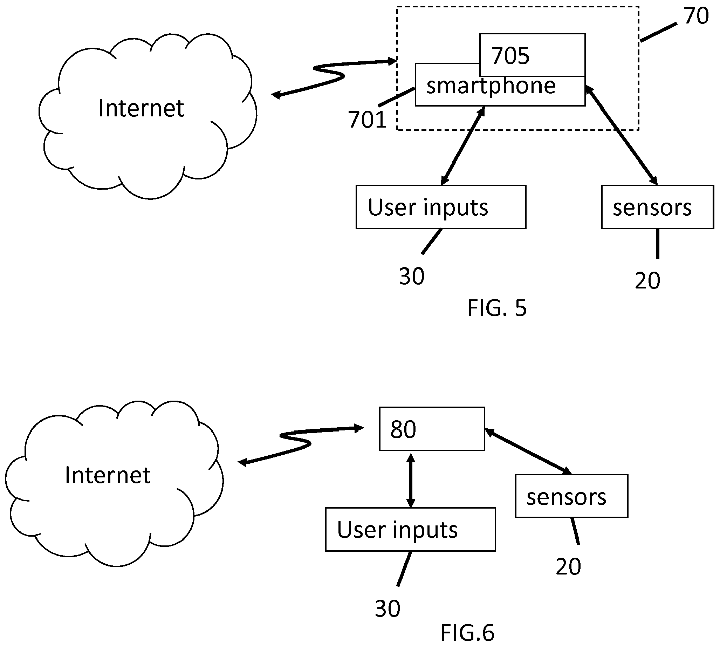

Figure 5 schematically represents a fourth embodiment of a system configured to decode, process and render immersive videos the immersive video rendering device 70 is provided by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage may be on the smartphone 701 or on a local server accessible through a local area network for instance (not represented).

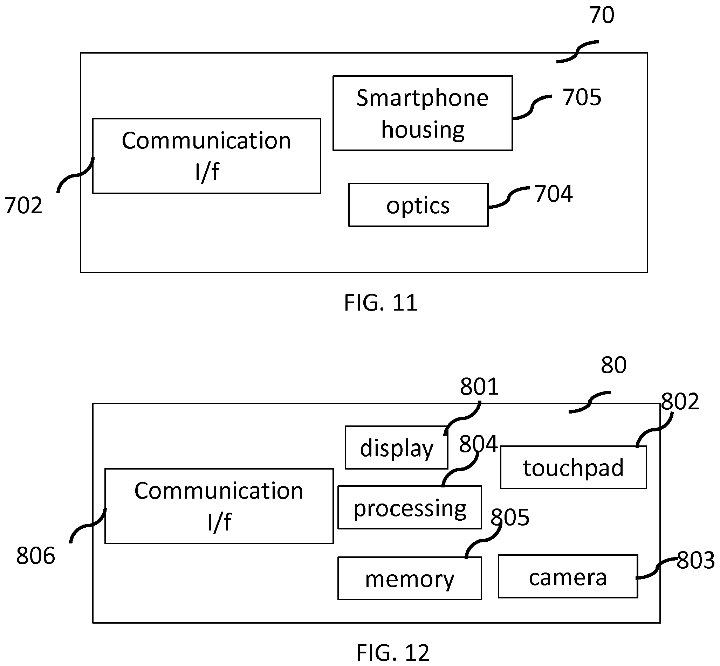

An embodiment of the immersive video rendering device 70 is described with reference to Figure 11. The immersive video rendering device 70 optionally includes at least one network interface 702 and housing 705 for the smartphone 701. The smartphone 701 includes functions of a smartphone and a display. The display of the smartphone is used as the immersive video rendering device 70 display. Optics 704, such as lenses, may be included for viewing the data on the smartphone display. The smartphone 701 is configured to process (for example, decode and prepare for display) data representative of an immersive video for example according to data received from the sensors 20 and from user input devices 30. Some of the measurements from sensors may be used to compute the pose of the device and to control the virtual camera. Sensors which may be used for pose estimation include, for instance, gyroscopes, accelerometers or compasses. More complex systems, for example a rig of cameras may also be used. In this case, the at least one processor performs image processing to estimate the pose of the device 10. Other measurements may be used to process the content according to environmental conditions or user reactions, for example. Sensors used for detecting environmental and users conditions include, for instance, microphones, light sensor or contact sensors. More complex systems may also be used such as, for example, a video camera tracking eyes of a user. In such case the at least one processor performs image processing to perform the measurement.

Figure 6 schematically represents a fifth embodiment of the first type of system in which the immersive video rendering device 80 includes functionalities for processing and displaying the data content. The system includes an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage may be provided on the rendering device 80 or on a local server accessible through a local area network for instance (not represented).

An embodiment of immersive video rendering device 80 is illustrated in Figure 12. The immersive video rendering device includes a display 801, for example an OLED or LCD type display, a touchpad (optional) 802, a camera (optional) 803, a memory 805 in connection with at least one processor 804 and at least one communication interface 806. Memory 805 includes parameters and code program instructions for the processor 804. Memory 805 may also include parameters received from the sensors 20 and user input devices 30. Memory 805may have a large enough capacity to store data representative of the immersive video content. Different types of memories may provide such a storage function and include one or more storage devices such as a SD card, a hard disk, a volatile or non-volatile memory...) Communication interface 806 enables the immersive video rendering device to communicate with internet network. The processor 804 processes data representative of the video to display images on display 801. The camera 803 captures images of the environment for an image processing step. Data are extracted from this step to control the immersive video rendering device.

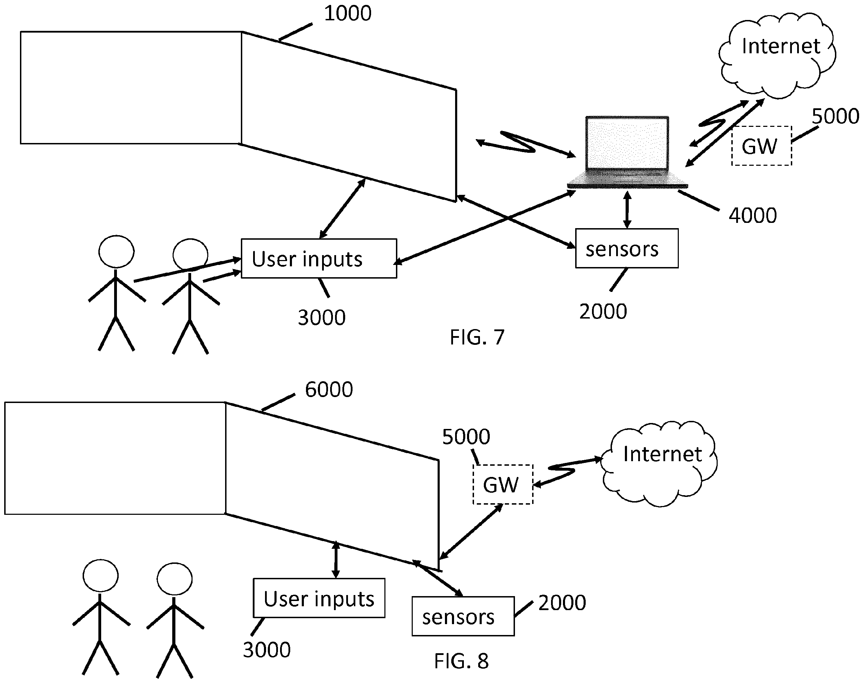

Embodiments of a second type of system, for processing augmented reality, virtual reality, or augmented virtuality content are illustrated in figures 7 to 9. In these embodiments the system includes an immersive wall.

Figure 7 schematically represents an embodiment of the second type of system including a display 1000 - an immersive (projective) wall which receives data from a computer 4000. The computer 4000 may receive immersive video data from the internet. The computer 4000 can be connected to internet, either directly or through a gateway 5000 or network interface. In another embodiment, the immersive video data are obtained by the computer 4000 from a local storage (not represented) where data representative of an immersive video are stored, said local storage may be in the computer 4000 or in a local server accessible through a local area network for instance (not represented).

This system may also include one or more sensors 2000 and one or more user input devices 3000.The immersive wall 1000 may be an OLED or LCD type and may be equipped with one or more cameras. The immersive wall 1000 may process data received from the more or more sensors 2000. The data received from the sensor(s) 2000 may, for example, be related to lighting conditions, temperature, environment of the user, such as for instance, position of objects.

The immersive wall 1000 may also process data received from the one or more user input devices 3000. The user input device(s) 3000 may send data such as haptic signals in order to give feedback on the user emotions. Examples of user input devices 3000 include for example handheld devices such as smartphones, remote controls, and devices with gyroscope functions.

Data may also be transmitted from sensor(s) 2000 and user input device(s) 3000 data to the computer 4000. The computer 4000 may process the video data (e.g. decoding them and preparing them for display) according to the data received from these sensors/user input devices. The sensors signals may be received through a communication interface of the immersive wall. This communication interface may be of Bluetooth type, of WIFI type or any other type of connection, preferentially wireless but may also be a wired connection.

Computer 4000 sends the processed data and, optionally, control commands to the immersive wall 1000. The computer 4000 is configured to process the data, for example prepare the data for display by the immersive wall 1000. Processing may be done exclusively by the computer 4000 or part of the processing may be done by the computer 4000 and part by the immersive wall 1000.

Figure 8 schematically represents another embodiment of the second type of system. The system includes an immersive (projective) wall 6000 which is configured to process (for example decode and prepare data for display) and display the video content and further includes one or more sensors 2000, and one or more user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

This system may also include one or more sensors 2000 and one or more user input devices 3000.The immersive wall 6000 may be of OLED or LCD type and be equipped with one or more cameras. The immersive wall 6000 may process data received from the sensor(s) 2000 (or the plurality of sensors 2000). The data received from the sensor(s) 2000 may for example be related to lighting conditions, temperature, environment of the user, such as position of objects.

The immersive wall 6000 may also process data received from the user input device(s) 3000. The user input device(s) 3000 send data such as haptic signals in order to give feedback on the user emotions. Examples of user input devices 3000 include for example handheld devices such as smartphones, remote controls, and devices with gyroscope functions.

The immersive wall 6000 may process the video data (e.g. decoding them and preparing them for display) according to the data received from these sensor(s)/user input device(s). The sensor signals may be received through a communication interface of the immersive wall. This communication interface may include a Bluetooth type, a WIFI type or any other type of wireless connection, or any type of wired connection. The immersive wall 6000 may include at least one communication interface to communicate with the sensor(s) and with the internet.

Figure 9 illustrates another embodiment in which an immersive wall is used for gaming. One or more gaming consoles 7000 are connected, for example through a wireless interface to the immersive wall 6000. The immersive wall 6000 receives immersive video data from the internet through a gateway 5000 or directly from internet. In an alternative embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

Gaming console 7000 sends instructions and user input parameters to the immersive wall 6000. Immersive wall 6000 processes the immersive video content, for example, according to input data received from sensor(s) 2000 and user input device(s) 3000 and gaming console(s) 7000 in order to prepare the content for display. The immersive wall 6000 may also include internal memory to store the content to be displayed.

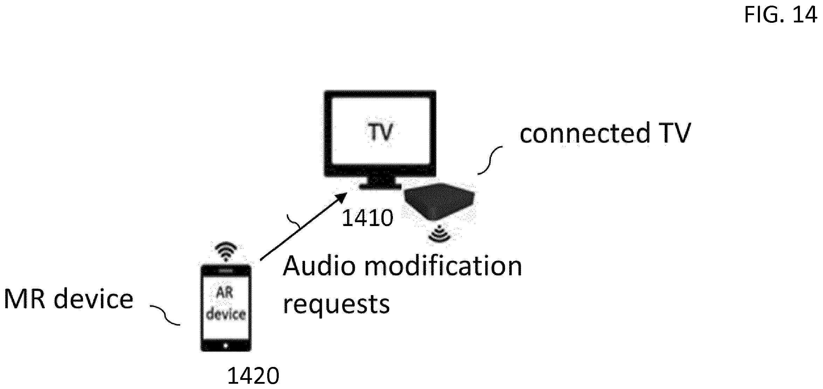

as user-data into the stream. The processor can be part of a set-top box, a computer, a smart television set, a mobile device such as smart phones or the like as can be appreciated by those skilled in the art. As mentioned in conjunction with the embodiment of Figure 14, more than one processor can also be used. The one or more processor will be in communication with the illumination components, such as the one or plurality of smart bulbs place in the environment (however that is defined) and be selectively or automatically altering the color and intensity of the illumination and its characteristics.

Figures 13 and 14 provides a system where real world sounds can be reproduced and provided through a number of connected devices such as but not limited to television sets, home theaters, hifi systems and others. A device enabled to render a VR/AR/MR environment can also be used such as mobile devices (tablets, smartphones, headsets, video gaming units etc.) that communicates with such audio-capable connected devices to request them to modify in real-time the way they emit the audio accordingly to the current state of the rendered VR/AR/MR scene. For ease of understanding, Figures 13 and 14 provide simple renditions of these applications with the appreciation that other arrangements can be provided in alternate embodiments.

The 3D engine of the AR/VR/MR device knows in real-time the location and the orientation of the user w.r.t. the AR/VR/MR scene and the real and virtual objects it contains. It also knows the 3D location of the speakers of the connected devices. Based on such information, the 3D engine sends messages to the audio-capable connected devices so that they modify the way they emit audio (e.g. set to mute, turn up/down the volume, change mode - mono/stereo-, change balance between left and right, front and rear, add filters...).

This allows the directly control of the way real audio sources emit sounds. In addition, there are no need to compensate/recover/cancel sounds from real sources by other new sounds. There is also no need to separate sources, or to estimate source localization since their 3D location is assumed to be initially known. This in turn, improves the immersion feeling by allowing realistic scenarios of MR experiences involving real audio-capable devices. This can be used even with devices that do not support 3D audio. In order to understand how this is achieved, the use of some examples many be useful. These examples are provided to be used in conjunction with renditions of Figures 13 and 14.

Figure 13 provides a first example where an audio device (i.e. radio set etc.) is provided as illustrated by numerals 1310. In a first example, the user is in their living room listening to a radio transmission that includes standard audio content. A song from a rock band is playing. The AR/VR/MR device recognizes the audio content (i.e. using a number of available applications such as Shazam) and offers the user a new AR/VR/MR audiovisual experience where the band appears in your living room. The audio modifications requests can be made in a number of ways using a user interface device that can range from a remote to a smart phone or any other mobile AR/VR/MR device shown by numerals 1320. However, the problem of what to do with the sound coming from the user's hifi system has to be resolved. Three different scenarios present themselves:
a- Nothing. It remains the only audio source but spatiotemporal synchronization with virtual animation of the band is likely impossible and the user experience will be very bad.
b- Nothing but a new spatial audio soundtrack is played in the MR device to partially recover sound coming from hifi system.
c- Mute the hifi system and plays a new spatial audio soundtrack in the MR device.

In most cases, for an optimal user experience, option "c" provides the best solution. In such a case, the VR/AR/MR device should notify (by wireless communication) the hifi system (supposed to be connected) that it recognized the song and then music is set to mute automatically.

Figure 14 provides a second example where a television set (including a set top box or other smart television components if desired) is provided as illustrated by numerals 1410. In this second example, the user is in the living room watching TV that displays standard audiovisual content. The user is using the VR/AR/MR device in which an extended AR/VR/MR scene related to the TV content is rendered. In this example, standard audiovisual content that is played is an advertisement for a masonry company and the AR/VR/MR scene is a brick breaking game starting with a high brick wall occluding the TV set. Of course, the aim is to break the wall. The problem is how to manipulate the sound coming from the TV set to make it realistic. In this example, the audio modifications requests can be made in a number of ways using a user interface device that can range from a remote to a smart phone or any other mobile AR/VR/MR device shown by numerals 1420
a- Nothing. But I am sure that the user experience would be much better if the user could perceive a difference in the sound coming from the TV while breaking the occluding wall.
b- Nothing but new spatial sounds related to the MR game are played in the MR device and they partially recover sound coming from the TV set. But again, the user experience could be much better if the user could perceive a difference in the sound coming from the TV while breaking the occluding wall.
c- Notify the connected TV set to adjust the volume depending on 1-the height/thickness of the wall, 2-the location of the user w.r.t. the TV set and the wall: if the wall is between the user and the TV set, the highest the wall the lowest the sound.

Again, for the user experience to be optimal, "c" presents the best option. In that case, the AR/VR/MR application running on the device should compute automatically the new properties the sound from the TV set should be played with and it should notify (such as by wired or wireless communication) the TV set accordingly.

Other concepts can be used in conjunction with the setup of examples 1 and 2 and others to further enhance the immersion feeling. For example real scene analysis can by made by analyzing real environments either in a pre-processing step or in real-time using existing computer vision and scene understanding algorithms to determine the 3D geometry and to localize in 3D the connected audio-capable devices. For such a task, one may use one or several RGB+D sensors and technologies like 3D point cloud analysis, 3D segmentation, object recognition or the like.

Positional tracking can also be used at any time. The AR/VR/MR device realizes the location and orientation relative to the other objects (real or virtual) present in the MR scene. Technologies like marker-based tracking, model-based tracking, SLAM, sensor fusion and the like, as known to those skilled in the art, can be used as examples.

In both examples and others the audio modification can be made by first determining the characteristics and properties of sound. The determination of the new properties the sound from the audio-capable connected device should be played with is based on the scenario of the MR experience, on the artistic intent and on some rules defined both by the audio designer and by some approximations of physical laws. Thus, we do not provide here general equations or rules that can be employed in any situations. The previous examples can be sued to provide a further illustrations. In the first example, where option c was found to be optimal (1-c), the AR/VR/MR device requests the connected device to set the audio to mute as the virtual band starts playing. In the second example, using option c (2-c), one very first approximate solution to simulate the presence of the brick wall and so, the reduction of the sound perceived from the TV set would be to define a multiplying factor *α* in [x,1] to be applied to the initial volume, with 0 <= x < 1 to be defined depending on the distance between the wall and the TV set. 0 if the wall touches the TV set, 1 if the distance is larger than the distance between the user and the wall. *α* would depend on the occlusion ratio of the TV set by the virtual wall (for the current position of the user). It would be 1 when the wall does not occlude at all the TV set and it would be x when the TV set is fully occluded.

Other non illustrated examples can also be used to further understand some of the concepts.

In a third example, (i.e. Example 3), a scenario is presented where the AR/VR/MR experience is to depict an illustration where the full room is flooded by water. As the level of virtual water reaches the speakers of the real connected device, the VR/AR/MR device requests the connected device to apply a low pass filter and a reverb filter to simulate sound heard underwater.

In a different example (i.e. Example 4), the scenario of the AR/VR/MR experience is to provide a reality where every furniture in the room is removed ("Diminished Reality") except the real connected device, the MR device requests the connected device to apply a reverb filter to simulate echo. Parameters of the filter can be tuned depending on the volume cleared by removed objects. The larger released volume the stronger echo effect. Then the effect is later reduced when refurbishing the room with a virtual sofa.

In yet another example (Example 5), if the scenario of the MR experience plans that a virtual zombie destroys your TV set, the MR device requests the TV set to set the audio to mute, or to add noise once the TV is destroyed. In another example (Example 6), a social MR experience involving tele-presence is presented. In this case, the remote user's position, movements, *but also voice* must be sensed, transmitted and duplicated in the current location to bring about the effect that he is physically present. Any sound being emitted by the virtual human or the avatar (whether VoIP or any audio triggered locally by an avatar - like footsteps) is modified by the real and virtual 3D objects or changes to the scene (adding reverb etc.) Here the audio-capable connected device is the MR device itself and the streamed audio is attached to the virtual human or the avatar, modified as needed and rendered by the 3D audio engine.

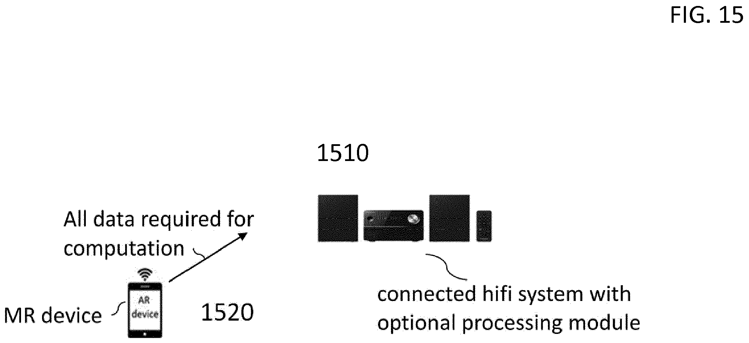

Figure 15 provides an alternate embodiment providing a device 1510 that has an optional processing module 1510. As before a user interface 1520 is also used. The computation of the new properties the sound from the audio-capable connected device should be played with is done on this later side instead of on the MR device side. In that case, the MR device sends all information required for the computation to the connected audio-capable device (in which an additional processing module is added if needed).

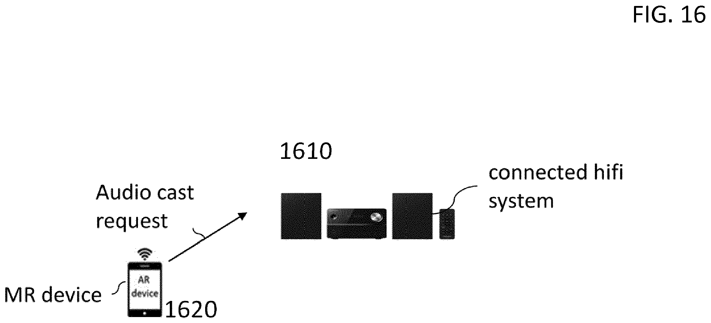

Similarly, in another embodiment as provided in Figure 16, a device 1610 that has an audio cast and connected hifi is provided . Again the user interface 1620 is provided. In this case, the audio of the real source is streamed to the MR device (like when using such cloud based or Internet provided applications (i.e Google ChromeCast Audio etc.) but in this case, this will be cast from hifi, tv, etc. to the MR device, and modified as needed by the 3D audio engine and attached to a virtual object fully transparent corresponding to the audio source real object. The 3D audio engine can be used to simulate distance, direction, occlusion or other characteristics.

One side advantage provided is also the ability for the secondary users that are in close proximity to the current "primary" user to also experience the audio alteration triggered by the MR change, as well (especially for people being close to any of the audio source(s) currently affected by the AR experience of that primary user). This allows for a more social and less isolated experience. The ability to provide a shared reality on the same single common MR device (a tablet or a smartphone, the headset is excluded here), is desirable. However, both shared or individual experiences can be achieved depending on user preferences. For example, in a scenario where other users do not yet take part into the MR experience, a specific display (e.g. text, video) on the User Interface of the connected device (TV screen, hifi system menu, etc.) can be used to encourage other users either to set up their own MR equipment to join the experience initiated by the current user in case of a private equipment such as a MR headset, or to watch the screen of the smartphone or the tablet of the current/primary user.

In another scenario where other users are taking part into the experience, alternate set ups can be achieved where these users are using their own AR/VR/MR device, so that their own 3D pose in the scene and their own personalized state of the experience and the AR/VR/MR scene is only partially shared (e.g. the same brick breaking game for all players but each of them does not break the wall at the same speed). In such a multi user experience involving alteration effects that are user-dependent, the variant 2 should be used: the audio of the real source is streamed to the different MR devices which modify it each in their own way.

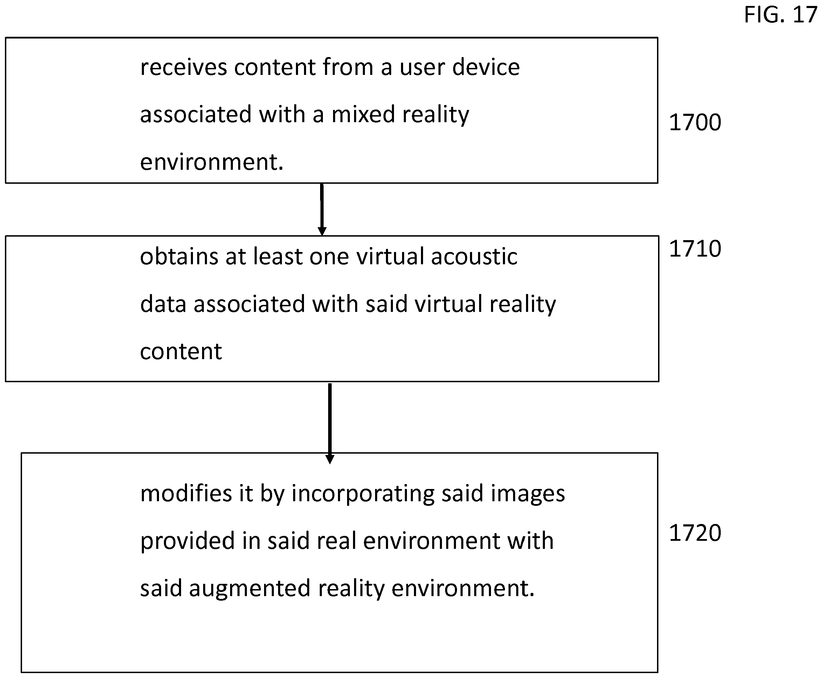

Figure 17 provides a flow chart of a methodology according to one embodiment.

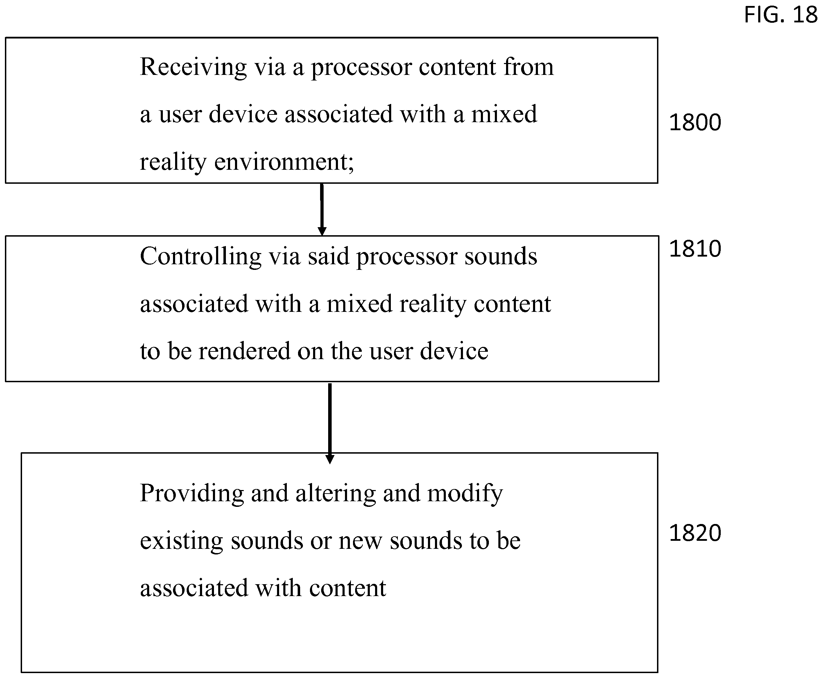

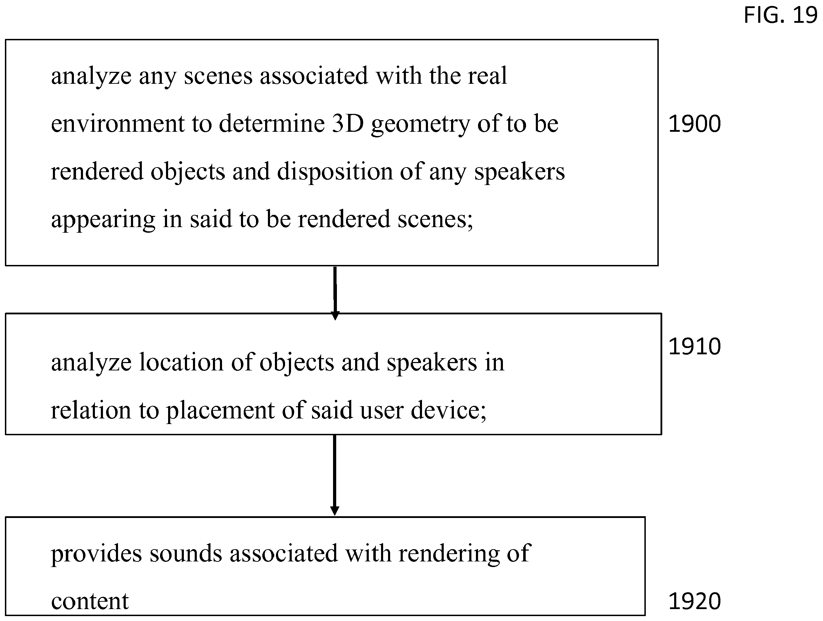

In step 1700, a processor receives content from a user device associated with a mixed reality environment. The content includes both virtual reality scenes and at least one image obtained from a real environment (i.e real scenes obtained from a real environment.) In step 1710, the processor controls acoustic data and sounds associated with a mixed reality content to be rendered on the user device. This includes providing and altering and modifying existing sounds associated with the content as provided in step 1720. In Figure 18, a more detailed view of the controlling step is provided. As indicated in step 1800, the processor analyzes any scenes associated with the real environment to determine 3D geometry of to be rendered objects and disposition of any speakers appearing in the to be rendered scenes. In step 1820, the processor analyzes location of objects and speakers in relation to placement of the user device and in step 1830 it provides sounds associated with rendering of the content. It should be noted that the sounds are associated with scenes relating to mixed environment and are modified appropriately based on previous analysis of location of speakers and objects.

While some embodiments have been described, it will be understood that those skilled in the art, both now and in the future, may make various improvements and enhancements which fall within the scope of the claims which follow. These claims should be construed to maintain the proper protection for the embodiments first described.

## Claims

1. A method comprising:
monitoring progress of a virtual reality content provided in a mixed reality environment; wherein said content includes virtual reality scenes and at least one image obtained from a real environment;
obtaining at least one virtual acoustic data associated with said virtual reality content;
modifying said acoustic data based on said at least one image provided in said real environment with said mixed reality environment.

2. An apparatus comprising
at least one processor configured
to monitor the progress of a virtual reality content provided in a mixed reality environment; wherein said mixed reality environment incorporates virtual reality content with at least one image provided from a real environment; and
to obtain at least one virtual acoustic data associated with said virtual reality content and to modify said acoustic data based on said at least one image provided in said real environment with said mixed reality environment.

3. The method of claim 1, or the apparatus of claim 2 wherein said monitoring includes positional tracking of objects in image contents both in real or virtual reality.

4. The method of claim 1 or 3, or the apparatus of claim 2 or 3 wherein preselected artistic effects can be added to enhance or modify effects based on approximations of physical laws.

5. The method of any of claims 1, 3 and 4, or the apparatus of any of claims 2 to 4, wherein said virtual acoustic data is further controlled by a user via a user interface device.

6. The method of claim 5 or apparatus of claim 5, wherein said user interface is a mobile device.

7. The method of any of claims 1, and 3 to 6, or the apparatus of any of claims 2 to 6 , comprising a reduction of the sound perceived defined by a multiplying factor *α* in [x,1] to be applied to an initial volume, with 0 <= x < 1 to be defined depending on the distance between the device and the object provided in the virtual or real environment.

8. The method of claim 7 or apparatus of claim 7, wherein *α* is dependent on the occlusion ratio.

9. The method of any of claims 1 and 3 to 8, or the apparatus of any of claims 2 to 8 wherein said content is received from a user device associated with a mixed reality environment and acoustic data to be rendered on said user device is controlled.

10. The method of any of claims 1, and 3 to 9, or the apparatus of any of claims 2 to 9, wherein said content is analyzed for any scenes associated with the real environment to determine geometry of objects to be rendered and/or disposition of any speakers appearing in said to be rendered scenes and location of objects and speakers in relation to placement of a user device is analyzed.

11. The method of any of claims 1, and 3 to 10, or the apparatus of any of claims 2 to 10, wherein said acoustic data includes sounds.

12. The method of claim 10 or 11 or apparatus of claim 10 or 11, wherein acoustic data sounds associated with scenes relating to mixed environment are modified appropriately based on previous analysis of location of speakers and objects.

13. The method of any of claims 1, and 3 to 12, or the apparatus of any of claims 2 to 12, wherein said processer is associated with an audio capable device.

14. The method of any of claims 1, and 3 to 13, or the apparatus of any of claims 2 to 13, wherein said first audio capable device renders at least some of the sounds associated with the to be rendered content of said real environment.

15. A computer program comprising instructions which when executed by one or more processors cause the one or more processors to carry out the method of any of the claims 1 or 3 to 14.
